**Europäisches Patentamt**

**European Patent Office**

**Office européen des brevets**

(11) Veröffentlichungsnummer: **0 195 417**

**B1**

(12) **EUROPÄISCHE PATENTSCHRIFT**

(45) Veröffentlichungstag der Patentschrift:
08.03.89

(21) Anmeldenummer: 86103669.7

(22) Anmeldetag: 18.03.86

(51) Int. Cl.⁴: **C 04 B 35/58,** C 04 B 35/04, C 04 B 35/10, C 04 B 35/14, C 04 B 35/48, B 22 D 11/10

(54) Gesinterte polykristalline Mischwerkstoffe auf Bornitridbasis.

(30) Priorität: 20.03.85 DE 3510111

(43) Veröffentlichungstag der Anmeldung:
24.09.86 Patentblatt 86/39

(45) Bekanntmachung des Hinweises auf die Patenterteilung:
08.03.89 Patentblatt 89/10

(84) Benannte Vertragsstaaten:
AT BE CH DE FR GB IT LI NL SE

(56) Entgegenhaltungen:
DE-A-2 629 960
JP-A-59 088 375
JP-A-59 189 982
SE-B-422 322
SU-A-441 255
US-A-4 304 870

(73) Patentinhaber: Elektroschmelzwerk Kempten GmbH, Herzog- Wilhelm- Strasse 16, D-8000 München 2 (DE)

(72) Erfinder: Sindlhauser, Peter, Ing. grad. (FH), Hochvogelweg 34, D-8969 Probstried (DE)
Erfinder: Hunold, Klaus, Dr. Dipl.- Ing., Hochgratweg 8, D-8961 Lauben (DE)
Erfinder: Lipp, Alfred, Dr. Dipl.- Chem., Bürgermeister- Singer- Strasse 15, D-8939 Bad Wörishofen (DE)

## Beschreibung

Gegenstand der Erfindung sind ausgewählte gesinterte polykristalline Mischwerkstoffe auf Basis von Bornitrid für die Verwendung als Abreiß- oder Brechringe beim horizontalen Stranggießen von Stahl.

Auf dem Gebiet des Stranggießens von Stahl sind neben den bekannten Senkrecht- und Bogengießanlagen auch bereits Horizontalanlagen entwickelt worden. Die Vorteile des horizontalen Stranggießens gegenüber dem konventionellen Stranggießen sind geringe Bauhöhe und Baukosten der Anlage, Schutz der Schmelze vor Rückoxidation und keine Verformung des Stranges. Horizontal-Stranggießanlagen sind daher besonders geeignet zum Vergießen von kleineren Schmelzen, hochlegierten Sonderstahlen und einfachen Baustählen in kleinen Mengen.

Beim horizontalen Stranggießen von Stahl ist die Kokille luftdicht mit einem Verteilergefäß verbunden. Die Erstarrung des Stahls, d.h., die Bildung der Strangschale in der Kokille, erfolgt daher nicht wie bei allen anderen Stranggießanlagen an einer Phasengrenzfläche zwischen flüssigen Stahl und dem umgebenden Gas, sondern in einer zusammenhängenden flüssigen Phase. Das erfordert spezielle Lösungen, um sicherzustellen, daß eine definierte Erstarrung an einer bestimmten Stelle der Kokille erfolgt.

Der Verteiler selbst hat die Aufgabe, einen konstanten Schmelzfluß- zu garantieren und die Schmelze gleichmäßig auf die Stränge zu verteilen. Den Übergang zur Kokille bildet ein Ofenstein, der fest im Ofen eingesetzt ist, und kokillenseitig eine Ausgußdüse, die aus einem hochwertigen feuerfesten Material, z. B. Zirkonoxid, besteht, da sie hohe Wärmespannungen aufnehmen muß. An diese Ausgußdüse schließt sich der Abreiß- oder Brechring an, der ein für den Horizontal-Stranggußß charakteristisches Bauteil ist. Dieser Abreißring muß im Dauerbetrieb gewährleisten, daß ab dieser Stelle die Bildung der Strangschale beginnt. Er dient somit dazu, den Ort der Erstarrung genau in der Kokille festzulegen. Da nicht zu vermeiden ist, daß sich am Abreißring selbst ebenfalls eine Schale bildet, muß diese leicht ablösbar sein und darf mit dem Material des Abreißringes keine Zwischenphase bilden. Außerdem wird eine hohe Thermoschockbeständigkeit und hohe Abriebfestigkeit verlangt. Das Fehlen eines geeigneten Materials, das diesen Anforderungen genügt, ist einer der Hauptgründe, weshalb das Horizontal-Stranggießen von Stahl sich bisher in der Praxis nicht durchgesetzt hat, obwohl das Verfahren an sich bereits seit mehr als 100 Jahren bekannt ist.

Bei den ab 1960 entwickelten Anlagen zum horizontalen Stranggießen von Stahl sind für die Lösung der Aufgabe, einen betriebssicheren Übergang vom Warmhalteofen in die Kokille zu schaffen, Abreißringe aus keramischem Material, wie Siliciumnitrid, Zirkonoxid, Bornitrid oder Aluminiumnitrid, bekannt geworden. Es wurde jedoch ebenfalls bekannt, daß bei Einsatz von beispielsweise Siliciumnitridringen typische Fehlerscheinungen des Horizontal-Stranggießens, wie Querrisse an der Oberfläche beim Ausziehen des erstarrten Stranges aus der Kokille, nicht verhindert werden konnten. Eine Verbesserung der Haltbarkeit der keramischen Verbindung zwischen Warmhaltegefäß und Kokille wird daher für dringend erforderlich gehalten (vgl. R. Thielmann und R. Steffen in "Stahl und Eisen" 100 (1980), Nr. 7, S. 401-407).

Feuerfeste Mischwerkstoffe auf Oxidbasis, die aufgrund von Graphitzusatz besonders haltbar sind, und sich deshalb für Tauchausgüsse bei konventionellen Stranggießverfahren bewährt haben (vgl. DE-A-2 936 480 und DE 3 003 046 C 2), können jedoch für Brechringe beim horizontalen Stranggießen nicht verwendet werden, weil hierdurch das Vergießen von hochlegierten Sonderstählen gestört wird, die besonders empfindlich gegen die Aufnahme von Kohlenstoff sind.

Feuerfeste Mischwerkstoffe, die aus hexagonalem Bornitridpulver und Metallpulvern durch Calcinieren in Abfallkoks hergestellt worden sind, wobei die Metalle (Al, Si, Ti etc.) in die entsprechenden Carbide, Nitride und Oxide umgewandelt werden, die als Bindemittel für das BN dienen, sind zwar ebenfalls zur Verwendung für Tauchausgüsse bekannt (vgl. JP-A-59-169 982). Für Brechringe der genannten Art sind sie aber gleichfalls nicht geeignet, da sie Kohlenstoff enthalten.

Werkstoffe auf Bornitridbasis, die aus Bornitridpulvern mit nicht ordnungsgemäßer Struktur und bis zu 5 Gew.-% Oxiden, wie Magnesiumoxid in einem Röstverfahren bei Temperaturen bis 1800°C hergestellt worden sind (vgl. DE-A-2 629 960), sind aufgrund ihrer geringen Dichte (max. 70,5 % TD) für die in Frage stehende Verwendung als Brechringe nicht geeignet.

Feuerfeste Werkstoffe aus gesintertem stabilisiertem Zirkonoxid mit einem Bornitridgehalt von nicht mehr als 20 % (vgl. JPN. Kokai Tokkyo Koho JP 59-21 575, ref. in C.A. 100: 196759e (1984)) genügen indessen ebensowenig den gestellten Anforderungen, wie solche auf Oxid- oder Nitridbasis allein, da Abplatzungen und Ausspülungen am Brechring nicht zu vermeiden sind. Das ist nicht nur mit einem erhöhten Verschleiß der Brechringe selbst, sondern auch mit unerwünschten Einlagerungen im Stahl verbunden, die insbesondere bei den für hochlegierte Sonderstähle erforderlichen langen Gießzeiten eine deutliche Qualitätsverminderung zur Folge haben.

Werkstoffe auf Bornitridbasis allein haben gegenüber den übrigen bekannten Materialien den Vorzug, daß sie von Stahl und Stahllegierungen praktisch nicht benetzt werden und außerdem leicht zu bearbeiten sind, was insbesondere für die Erzielung einer genauen Paßform des Brechrings am Einsatzort von entscheidender Bedeutung ist.

Es stellt sich somit die Aufgabe, den Werkstoff auf Basis von Bornitrid durch Auswahl geeigneter Zusätze so zu verbessern, daß er für die Verwendung als Abreiß- oder Brechring beim horizontalen Stranggießen von Stahl den gestellten Anforderungen genügt.

Diese Aufgabe wird erfindungsgemäß dadurch gelöst, daß gesinterte Polykristalline Mischwerkstoffe auf Basis von Bornitrid und Oxiden vorgeschlagen werden, in welchen der hexagonale Bornitridanteil 80 bis 60 Gew.-% beträgt und der Oxidanteil aus Zirkonoxid oder Magnesiumoxid besteht, mit einer Dichte von mindestens 94 % der theoretisch möglichen Dichte (bezogen auf das Bornitrid - Oxidgemisch).

Als Ausgangsmaterialien für die Herstellung der erfindungsgemäß verwendeten Mischwerkstoffe werden vorteilhaft hexagonale Bornitridpulver mit einem Sauerstoffgehalt von 6 bis 10 Gew.-% und einer spezifischen Oberfläche von 5 bis 30 m²/g (gemessen nach der BET-Methode) und die ausgewählten Oxidpulver mit einer Reinheit von jeweils mindestens > 97 % eingesetzt, die bei Temperaturen im Bereich von 1600° bis 2000°C unter einem Druck von 7 bis 20 MPa heißgepresst werden.

Diese Pulver werden in an sich bekannter Weise in einer üblichen Mischvorrichtung, gegebenenfalls unter Mitverwendung eines temporären Bindemittels, homogen vermischt und anschließend in Graphitformen unter biaxialer Druckanwendung bei Temperaturen von vorzugsweise 1700 bis 1900°C unter einem Druck von vorzugsweise 9 bis 11 MPa heißgepresst. Aus den so erhaltenen Blöcken werden die Ringe in den gewünschten Abmessungen herausgeschnitten und auf Endform bearbeitet.

Die erfindungsgemäß verwendeten Mischwerkstoffe bestehen vorwiegend aus einer hexagonalen Bornitridphase, neben den Oxidphasen, wobei die Bornitridphase mit dem im Ausgangspulver vorhandenen Boroxid (ausgedrückt durch den Sauerstoffgehalt im angegebenen Bereich) gebunden ist, das als Sinterhilfsmittel wirkt, vermutlich unter teilweiser Bildung aus Boroxinitridphasen.

Die erfindungsgemäß verwendeten Mischwerkstoffe zeigten im Vergleich mit einem gesinterten polykristallinen Werkstoff aus Bornitrid allein ein beträchtlich verbessertes Verschleißverhalten, wenn sie als Brechringe beim horizontalen Stranggießen verschiedener Stahlsorten eingesetzt wurden. In den folgenden Beispielen wird der Erfindungsgegenstand näher erläutert.

**Beispiel 1:**

a)  Ein Pulvergemisch aus 30 Gew.-% Zirkonoxid (Reinheit: 98 %), 68 Gew.-% Bornitrid (O₂-Gehalt 7 Gew.-%, spezifische Oberfläche 10 m²/g) und 2 Gew.-% eines temporären Bindemittels wurde in Graphitformen zu einem Sinterkörper bei 1800°C und 10 MPa heißgepresst. Die Blockgröße war d 200 und Lenge 200 mm. Die erreichte Dichte lag bei 96 % der theoretischen Dichte.

b)  Unter den gleichen Bedingungen wurde ein Pulvergemisch aus 98 Gew.-% des Bornitridpulvers und 2 Gew.-% des temporären Bindemittels heißgepresst. Erreichte Dichte: 94 % TD.

Aus diesen Körpern wurden Ringe mit den Abmessungen $d_a$ 65 x $d_i$ 45 x 12,7 mm und $d_a$ 165 x $d_i$ 120 x 12,7 mm und Proben für weitere Untersuchungen herausgearbeitet. Die Tabelle 1 zeigt die erreichten Ergebnisse im Vergleich zu Bornitrid. Gegossen wurde mit dem Ring ($d_a$ 165 x $d_i$ 120 x 12,7 mm) rostfreier Stahl. Bei dieser Stahlqualität traten bei Verwendung von reinen Bornitridringen verstärkt Ausspülungen an der Ringaustrittseite auf. Tabelle 2 gibt die erreichten Ergebnisse im Vergleich wieder.

Mit dem Ring $d_a$ 65 x $d_i$ 45 x 12,7 mm wurde ein hochkobaltlegierter Stahl vergossen. Auch hier traten bisher die üblichen Ausspülungen an der Ringaustrittseite auf. Tabelle 2 zeigt die erreichten Ergebnisse.

**Beispiel 2:**

Ein Pulvergemisch aus 30 Gew.-% Magnesiumoxid (Reinheit: 98 %), 68 Gew.-% des Bornitrids aus Beispiel 1 a) und 2 Gew.-% des temporären Bindemittels wurde zu einem Sinterkörper bei 1700°C und 10 MPa heißgepreßt. Die Blockgröße war d 180 und 200 mm Länge. Die erreichte Dichte lag bei 94 % der theoretischen Dichte.

Aus diesem Körper wurden ebenfalls Ringe mit der Abmessung $d_a$ 165 x $d_i$ 120 x 12,7 mm herausgearbeitet. Die Tabelle 1 gibt die erreichten Meßwerte im Vergleich zu Bornitrid wieder. Gegossen wurde mit dem Ring rostfreier Stahl. Tabelle 2 zeigt die erreichten Ergebnisse im Vergleich zu Bornitrid.

3

**Tabelle 1**

| Meßgröße | | Dimension | Bornitrid senkrecht zur Preßrichtung | Bornitrid-Zirkonoxid | Bornitrid-Magnesiumoxid |
|---|---|---|---|---|---|
| E-Modul | | N/mm² | 45 000 | 54 000 | 51 000 |
| Biegebruchfestigkeit | | N/mm² | 45 | 77 | 65 |
| Härte | | HK 0,1 | 250 | 410 | 290 |
| Therm. Ausdehnung | | K⁻¹ | $4,0 \cdot 10^{-6}$ | $5,0 \cdot 10^{-6}$ | $5,8 \cdot 10^{-6}$ |
| Wärmeleitfähigkeit | 20°C | W/mK | 41,5 | 50,0 | 52,8 |
| | 1000°C | | 20,6 | 18,0 | 21,0 |

**Tabelle 2**

| | $d_a$ 65 x $d_i$ 45 x 12,7 mm | | $d_a$ 165 x $d_i$ 120 x 12,7 mm | | |
|---|---|---|---|---|---|
| | Bornitrid | Bornitrid-Zirkonoxid | Bornitrid | Bornitrid-Zirkonoxid | Bornitrid-Magnesiumoxid |
| Stahlqualität | kobaltlegiert | kobaltlegiert | rostfrei | rostfrei | rostfrei |
| Gießzeit | 240 min. | 240 min. | 60 min. | 60 min. | 75 min. |
| vergossene Menge | 60 t | 60 t | 25 t | 25 t | 31 t |
| Verschleiß | ringförmige Aus-Spülungen, leichte Abplatzungen, Ring nicht mehr weiter verwendbar | keine Ausspülungen und Abplatzungen, Verschleiß sehr gering, Ring weiker verwendbar | ringförmige Aus-spülungen, verstärkte Abplatzungen, Ring nicht weiter verwendbar | keine Ausspülungen und Abplatzungen, Verschleiß sehr gering, Ring weiter verwendbar | sehr geringe Ausspülungen, keine Abplatzungen, Verschleiß gering, Ring weiter verwendbar |

**Patentansprüche**

1. Gesinterte polykristalline Mischwerkstoffe auf Basis von Bornitrid und Oxiden für die Verwendung als Abreißoder Brechringe beim horizontalen Stranggießen von Stahl, dadurch gekennzeichnet, daß als Mischwerkstoffe solche verwendet werden, in welchen der hexagonale Bornitridanteil 80 bis 60 Gew.-% beträgt und der Oxidanteil aus Zirkonoxid oder Magnesiumoxid besteht, mit einer Dichte von mindestens 94 % der theoretisch möglichen Dichte (bezogen auf das Bornitrid-Oxidgemisch).

2. Verfahren zur Herstellung der Mischwerkstoffe nach Anspruch 1, dadurch gekennzeichnet, daß Pulvergemischeaus hexagonalem Bornitrid mit einem Sauerstoffgehalt von 6 bis 10 Gew.-% und einer spezifischen Oberfläche von 5 bis 30 m²/g (gemessen nach der BET-Methode) und aus Zirkonoxid oder Magnesiumoxid mit einer Reinheit von jeweils ) 97 % bei Temperaturen im Bereich von 1600 bis 2000°C unter einem Druck von 7 bis 20 MPa heißgepresst werden.

**Claims**

1. Sintered polycrystalline mixed materials based on boron nitride and oxides for use as break rings in horizontal continuous casting of steel, characterized in that the mixed materials used are such that the hexagonal boron nitride proportion is 80 to 60 % by weight and the proportion of oxide consists of zirconia or magnesia with a density of at least 94 % of the theoretically possible density (referred to the boron nitrideoxide mixture).

2. Process for the manufacture of mixed materials according to claim 1, characterized in that powder mixtures of hexagonal boron ni tride with an oxygen content of 6 to 10 % by weight and a specific surface area of 5 to 30 m²/g (measured by the BET method) and of zirconia or magnesia, each having a purity of ) 97 %, are hot-compacted at temperatures in the range of 1600 to 2000°C under a pressure of 7 to 20 MPa.

**Revendications**

1. Matériaux mixtes polycristallins frittés à base de nitrure de bore et d'oxydes, destinés à être utilisés sous la forme d'anneaux d'arrachement ou de rupture dans la coulée continue horizontale de l'acier, matériaux caracérisés en ce qu'on utilise, comme matériaux mixtes, des matériaux dans lequels la proportion de nitrure de bore hexagonal est de 80 à 60 % en poids et la composante oxydes est constituée d'oxyde de zirconium ou d'oxyde de magnésium, avec une densité d'au moins 94 % de la densité théoriquement possible (relativement au mélange nitrure de bore/oxyde).

2. Procédé pour préparer des matériaux mixtes selon la revendication 1, procédé caractérisé en ce qu'on comprime à chaud dans un intervalle de température allant de 1600 à 2000°C et sous une pression de 7 à 20 MPa des mélanges pulvérulents constitués d'un nitrure de bore hexagonal ayant une teneur en oxygène de 6 à 10 % en poids et une surface spécifique de 5 à 30 m2/g (mesurée par la méthode BET), et d'oxyde zirconium ou d'oxyde de magnésium ayant chacun une pureté supérieure à 97 %.